# EUROPÄISCHE PATENTSCHRIFT

(11) **EP 0 387 188 B1**
(45) Veröffentlichungstag und Bekanntmachung des Hinweises auf die Patenterteilung: **03.11.1993**
(21) Anmeldenummer: 90810094.4
(22) Anmeldetag: 12.02.1990
(51) Int. Cl.: B65G 35/06

(54) **Prisma-Weiche**
Prismatic points
Aiguille prismatique

(30) Priorität: 07.03.1989 CH 838/89
(43) Veröffentlichungstag der Anmeldung: 12.09.1990
(73) Patentinhaber: SFT AG Spontanfördertechnik, CH-8570 Weinfelden (CH)
(72) Erfinder: Christen, Hanspeter, CH-9215 Schönenberg a.d. Thur (CH)
(74) Vertreter: Frei, Alexandra Sarah

(56) Entgegenhaltungen:
- AT-B- 214 851
- AU-B- 423 559
- US-A- 3 666 050
- US-A- 3 670 659

## Beschreibung

Die vorliegende Erfindung betrifft eine Vorrichtung zur wahlweisen Verbindung von Fahrbahnen in einem Fördersystem gemäss dem Oberbegriff des unabhängigen Patentanspruchs.

Die Erfindung ist im Zusammenhang mit der früheren Patentanmeldung derselben Anmelderin EP-A- 316 273 zu sehen. Diese zeigen ein modulares Fördersystem, dessen Förderbahnen entsprechend ausgebildete Kettenführungskanäle mit darin verlaufenden zug- und stossbetreibbaren Förderketten ohne Rücktrum aufweisen, wobei diese Ketten an ihrem einen Endbereich je mit einem Fördermittel zur Aufnahme einer Last und zum Verschieben derselben auf der zugeghörigen Förderbahn versehen und an ihrem andern Endbereich je durch ein entsprechend ausgebildetes Antriebsorgan geführt und durch dieses hin- und herbewegbar sind. In den erwähnten Anmeldungen wird unter anderem eine Weiche gezeigt, mittels welcher verschiedene Teilstücke des Fördersystems wahlweise miteinander verbunden werden können.

Diese Weiche besteht aus einer ebenen kreisförmigen Platte, welche im Zentrum einer Fahrbahn-Verzweigung angeordnet und mit einem oder mehreren Teilstücken von Kettenführungskanälen versehen ist. Durch Drehung dieser Platte, welche gewissermassen einen lokalen Verkehrsknoten bildet, kann wahlweise das eine oder andere Teilstück so positioniert werden, dass es den Kettenkanal einer zuführenden Fahrbahn mit dem Kettenkanal einer auf der andern Seite der Platte befindlichen wegführenden Fahrbahn verbindet.

Dadurch wird es möglich, einfache, insbesondere Y-förmige Verzweigungen auf effiziente Weise zu realisieren. Obwohl mit einer solchen ebenen Drehplatte grundsätzlich nicht nur Verzweigungen, sondern auch einfache Kreuzungen gesteuert werden könnten, stösst man mit zunehmendem Komplexitätsgrad des Knotenpunktes relativ rasch an Grenzen, welche mit dem vorangehend beschriebenen Konzept nicht überschritten werden können. Dies soll anhand der nachstehenden Ausführungen erläutert werden:

Die Aufgabe einer solchen Weiche besteht ja gewissermassen aus zwei grundsätzlichen Aspekten: einem positiven, nämlich der wahlweisen Verbindung von zwei gegenüberliegenden Fahrbahnen, und einem negativen, nämlich der Unterbrechung der andern möglichen Verbindungen. Letzteres ist ein Postulat der Verkehrssicherheit. Mit andern Worten, während das eine Teilstück der Weiche eine Verbindung zwischen den Kettenführungskanälen zweier gegenüberliegender Fahrbahnen bildet, muss sichergestellt werden, dass nicht gleichzeitig ein anderes Teilstück der Weiche mit dem Kettenführungskanal einer weiteren Fahrbahn in Übereinstimmung steht. In der Praxis bedeutet dies, dass mit einer solchen Weiche aufgrund der endlichen Abmessungen und minimalen Krümmungsradien der Fahrbahnen - wie bereits vorangehend erwähnt - eben nur eine beschränkte Anzahl potentieller Verbindungen realisierbar ist.

Die Anzahl der potentiellen Verbindungen (der Grad) eines Knotenpunktes ist das Produkt aus der Anzahl der Zu- und der Wegführungen, wobei diese beiden Begriffe hier grundsätzlich austauschbar sind und einfach gegenüberliegende Fahrbahnen bezeichnen. Es zeigt sich in der praktischen Ausführung, dass die beschriebene ebene Drehplatte erlaubt, Knotenpunkte bis etwa vierten Grades zu realisieren. Ein Knotenpunkt zweiten Grades entspricht also der oben erwähnten Y-Verzweigung mit zwei Zuführungen und einer Wegführung, einer solcher vierten Grades einer Verzweigung mit zwei zu- und zwei wegführenden Fahrbahnen. Höhere Grade sind wohl - wenn überhaupt - nur schwer zu realisieren, da mit zunehmender Anzahl der zu verbindenden Bahnen die Anzahl der auf der Platte anzubringenden Kanalteilstücke steigt, wobei unter Beachtung des Prinzips der Verkehrssicherheit keine Kreuzungen von einzelnen Teilstücken auf der Platte selbst vorkommen dürfen und jeweils immer alle nicht an der aktuellen Verbindung beteiligten Fahrbahnen durch die Weiche blockiert werden sollen.

Hier will die Erfindung Abhilfe schaffen. Sie stellt sich die Aufgabe, eine Weiche für ein Fördersystem der eingangs beschriebenen Art zu realisieren, mittels welcher bei gleichbleibender Verkehrssicherheit, bedeutend komplexere und vielseitigere Knotenpunkte realisierbar sind. Diese Aufgabe wird durch die kennzeichnenden Merkmale des unabhängigen Patentanspruchs gelöst.

Die wesentlichen Vorteile dieser Erfindung sind darin zu sehen, dass - indem die dritte Dimension in das Konzept des zweidimensionalen Kontenpunktes integriert wird - eine Vielzahl zusätzlicher Verbindungsvarianten geschaffen wird. Im Unterschied zur vorangehend beschriebenen ebenen Drehplatte, deren begrenzte Fläche naturgemäss nur eine beschränkte Anzahl von Verbindungs-Teilstücken aufzunehmen imstande ist, eröffnet die vorliegende Erfindung die Möglichkeit, durch geeignete Drehung der erfindungsgemässen Prisma-Weiche ein oder mehrere zusätzliche Teilstücke gewissermassen aus der dritten Dimension zu holen. Zudem wird die durchschnittliche Schaltgeschwindigkeit des Knotenpunktes erhöht, da mit der erfindungsgemässen Prisma-Weiche zur Herstellung einer neuen Verbindung in der Regel bereits eine Drehung um einen kleineren Winkel genügt. Daneben können nun auch problemlos beliebige Fahrbahnkreuzungen realisiert werden, indem die jeweiligen Teilstücke auf verschiedene Seitenflächen der Prisma-Weiche gelegt werden. Weitere Vorteile und Varianten werden aus der nachfolgenden Beschreibung ersichtlich.

Die Erfindung wird nun anhand von lediglich einen Ausführungsweg darstellenden Zeichnungen näher erläutert. Dabei zeigen:
- Fig. 1: einen vereinfachten Fahrbahnquerschnitt des Fördersystems;
- Fig. 2A: eine Draufsicht einer einfachen Verzweigung mit einer erfindungsgemässen Prisma-Weiche;
- Fig. 2B: dieselbe Verzweigung mit umgeschalteter Prisma-Weiche;
- Fig. 3: eine perspektivische Darstellung der Weiche der Figuren 2A und 2B;
- Fig. 4A: einen Längsschnitt durch die Verzweigung der Figur 2B;
- Fig. 4B: einen Querschnitt durch die Verzweigung der Figur 2B;
- Fig. 5: eine schematische Darstellung einer erfindungsgemässen Prisma-Weiche in einem komplexen Knotenpunkt;
- Fig. 6: eine Ausführungsform, bei der die Prisma-Weiche zusätzlich um eine weitere Raumachse drehbar ist;
- Fig. 7: eine schematische Darstellung der Weiche von Fig. 6 in einem komplexen Knotenpunkt; und
- Fig. 8: eine Ausführungsform zur Kombination mehrerer Prisma-Weichen.

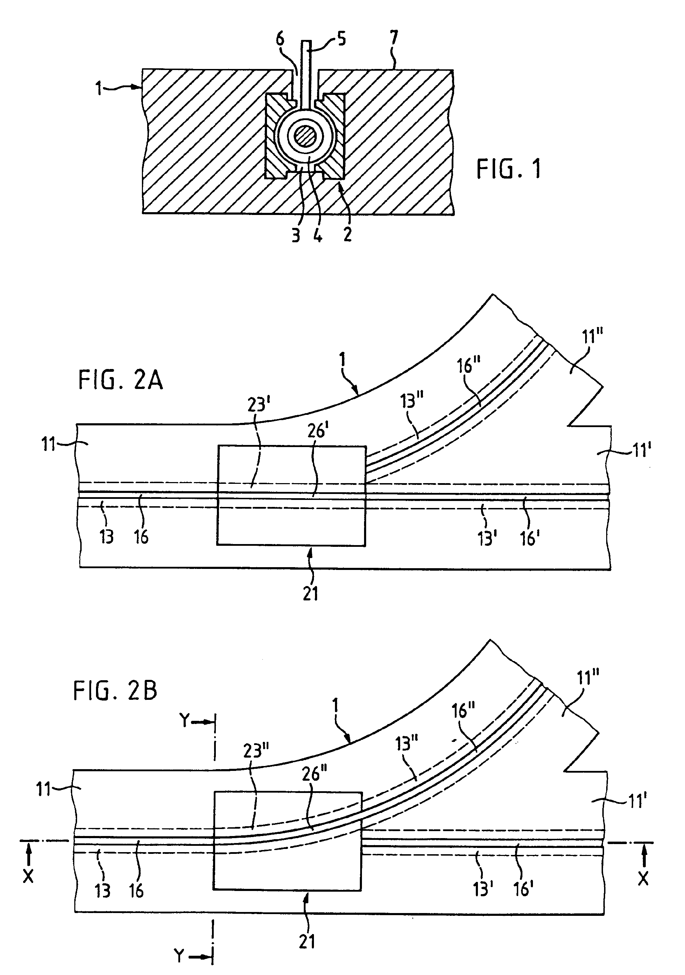

Figur 1 zeigt zum besseren Verständnis des der Erfindung zugrundeliegenden Fördersystems einen Querschnitt durch eine vereinfachte Fahrbahn desselben. Diese besteht in ihrem grundsätzlichen Aufbau aus einem Fahrbahnkörper 1 und einer darin eingebetteten Transportkettenführung 2, welche einen Transportkettenkanal 3 umschliesst. In diesem Transportkettenkanal 3 verläuft eine zug- und stossbetreibbare Transportkette 4 ohne Rücktrum (z.B. eine Gliederkette gemäss dem Schweizer Patent Nr. 646'762). Diese Kette ist mit ihrem einen Endbereich durch ein (hier nicht ersichtliches) ortsfestes Antriebsorgan geführt und durch dieses hin- und herbewegbar, während sie an ihrem andern Endbereich eines oder mehrere Verbindungsteile 5 aufweist, welche durch einen durchgehenden Führungsschlitz 6 hindurchragen. Diese Verbindungsteile 5 stellen die Verbindung zwischen der Gliederkette 4 einerseits und einem auf der Oberfläche 7 der Fahrbahn 1 befindlichen (nicht dargestellten) Transportmittel dar (z.B. ein mit Rollen versehenes Tablett). Durch die sich tentakelartig im Kettenkanal 3 hin- und herbewegende Kette 4 wird das Transportmittel auf der Förderbahn vor- und zurückbewegt.

Die Figuren 2A und 2B zeigen nun in Draufsicht eine einfache Y-förmige Fahrbahnverzweigung im Rahmen des vorangehend beschriebenen Fördersystems, mit einer erfindungsgemässen Weiche zur wahlweisen Umschaltung zwischen den zwei Verbindungsmöglichkeiten (11-11' gem. Fig. 2A bzw. 11-11'' gem. Fig. 2B). Bewusst wird zur grundsätzlichen Darstellung der Erfindung zunächst bloss ein Knotenpunkt zweiten Grades gewählt, um die Figuren möglichst übersichtlich zu halten. Dabei stellt eine in der dargestellten Ausführung quaderförmig ausgebildete, um ihre Längsachse drehbare Prisma-Weiche 21 wahlweise die Verbindung zwischen zwei Zuführungen 11' bzw. 11'' und einer Wegführung 11 dar (vgl. hiezu die nachstehenden Ausführungen). In beiden Darstellungen sind die Transportkettenkanäle 13, 13', 13'' mit den jeweiligen durchgehenden Führungsschlitzen 16, 16', 16'' schematisch angegeben, so dass ersichtlich ist, dass die Prisma-Weiche 21 in Figur 2A mittels Kettenkanalstück 23' und zugehörigem Führungsschlitz 26' die Verbindung zwischen der Zuführung 11' und der Wegführung 11 herstellt, während sie in Figur 2B mittels Kettenkanalstück 23'' und zugehörigem Führungsschlitz 26'' die Zuführung 11'' mit der Wegführung 11 verbindet. In beiden Schaltpositionen ist jeweils gleichzeitig die nicht an der Verbindung beteiligte Zuführung (11'' in Fig. 2A; 11' in Fig. 2B) blockiert.

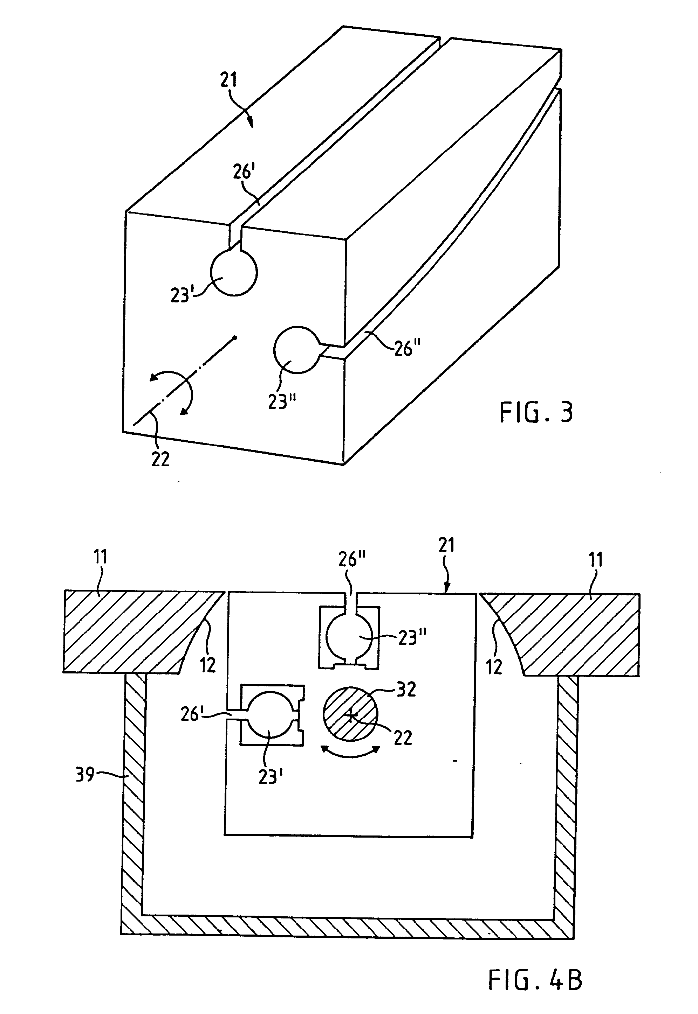

Die erfindungsgemässe Prisma-Weiche 21 weist in dieser einfachen Ausführung die Form eines Quaders auf. Figur 3 zeigt diese Prisma-Weiche schematisch in perspektivischer Darstellung und mit denselben Bezugsziffern wie in den Figuren 2A und 2B. Dadurch ist leicht ersichtlich, dass die Prisma-Weiche durch 90°-Drehung um ihre Längsmittelachse 22 von der in Figur 2A dargestellten Position in diejenige von Figur 2B (bzw. umgekehrt) überführbar ist.

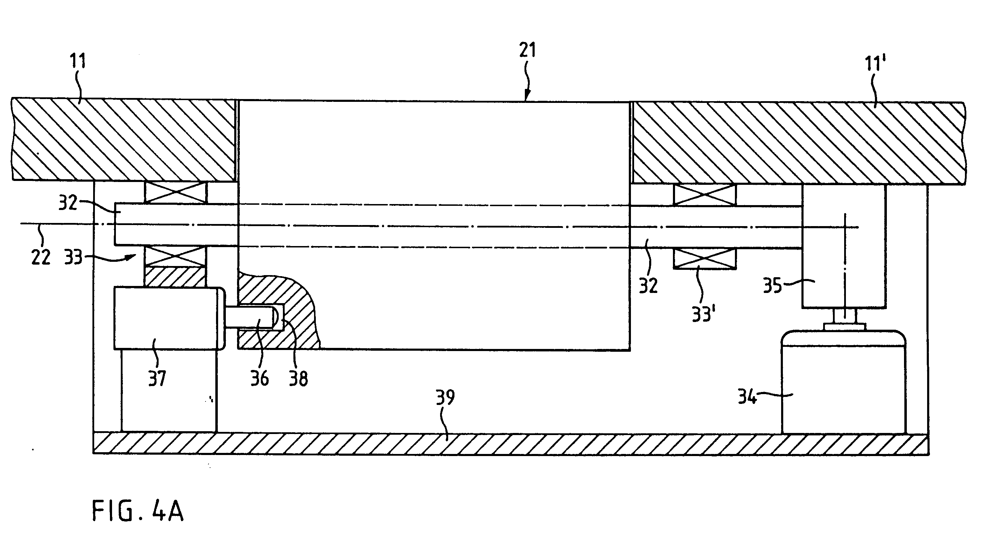

Die Figuren 4A und 4B zeigen in schematischer Form die Anordnung einer erfindungsgemässen Prisma-Weiche bei einer Verzweigung. Figur 4A stellt dabei einen Längsschnitt durch die Drehachse der Weiche dar (Linie X-X in Figur 2B), während Figur 4B einen entsprechenden Schnitt quer zur Drehachse zeigt (entlang Linie Y-Y in Fig. 2B). Der Klarheit halber wurde in Figur 4A auf eine Darstellung der Kettenkanäle verzichtet.

Die quaderförmige Prisma-Weiche 21 von Figur 4A ist zwischen die beiden Zuführungen 11' und 11'' und der Wegführung 11 eingepasst. Sie ist um ihre Längsmittelachse 22 drehbar gelagert. Zu diesem Zweck ist beispielsweise eine mit dem Quader fest verbundene Welle 32 vorgesehen, die vorzugsweise auf beiden Seiten des Quaders in justierbaren Lagern 33 und 33' ruht, wobei diese Lager mit den jeweiligen Fahrbahnen 11, 11' fest verbunden sind. Mittels eines Motors 34 und eines zwischengeschalteten Getriebes 35 wird die Welle 32 je nach erforderlicher Schaltposition der Prisma-Weiche 21 angetrieben. Ein z.B. über einen Elektromagneten 37 betätigbarer Bolzen 36 rastet bei Erreichen der gewünschten Schaltposition der Prisma-Weiche 21 in eine darin vorgesehene Sackbohrung 38 ein, wodurch diese genau positioniert und bis zum nächsten Umschaltvorgang arretiert wird. Auf die Steuerung des Motors 34 und des Bolzens 36 ist hier nicht näher einzugehen. Selbstverständlich ist je nach Art des Fördersystems auch eine manuelle Betätigung der Weiche möglich. Die gesamte Vorrichtung ist vorzugsweise in einem Gehäuse 39 untergebracht.

Aus Figur 4B ist ersichtlich, dass die Fahrbahn 11 auf ihrer Unterseite im Bereich der Prisma-Weiche 21 z.B. kreissegmentförmige Ausnehmungen 12 aufweist, um eine Drehung der quaderförmigen Weiche zu ermöglichen.

Wenn die Weiche ihre Schaltposition ändert, d.h. im Moment der Drehung um ihre Achse 22, entsteht beidseitig eine Lücke zwischen der Weiche und der umgebenden Fahrbahn, welche sich bei Erreichen der Endposition wieder schliesst. Um die dadurch hervorgerufene Unfallgefahr (z.B. Einklemmen eines Fingers) zu eliminieren, wird der Motor 34 vorzugsweise so schwach ausgelegt, dass er durch einen eingeklemmten Gegenstand ohne weiteres blockiert wird. Denkbar wären natürlich auch andere Sicherheitsvorkehrungen, wie eine Rutschkupplung oder eine elektronische Überwachung der Umgebung der Weiche, insbesondere der erwähnten Lücken.

Anstelle einer reinen Drehbewegung der Weiche wäre es auch denkbar, diese vor der Drehung abzusenken und nach der Drehung wieder in Arbeitshöhe zu bringen, wodurch die erwähnte Einklemmgefahr reduziert würde.

Die bis anhin diskutierten Figuren lassen die Grundidee der vorliegenden Erfindung erkennen, die darin besteht, einen zweidimensionalen Knotenpunkt, nicht wie bis anhin durch ebenfalls zweidimensionale Mittel zu verknüpfen, sondern die dritte Dimension in das Konzept einzubeziehen. Dass dadurch die Vielfalt der möglichen Schaltvarianten im Vergleich zu zweidimensionalen Lösungen wesentlich erhöht werden kann, soll anhand der nachfolgenden schematischen Figuren dargestellt werden.

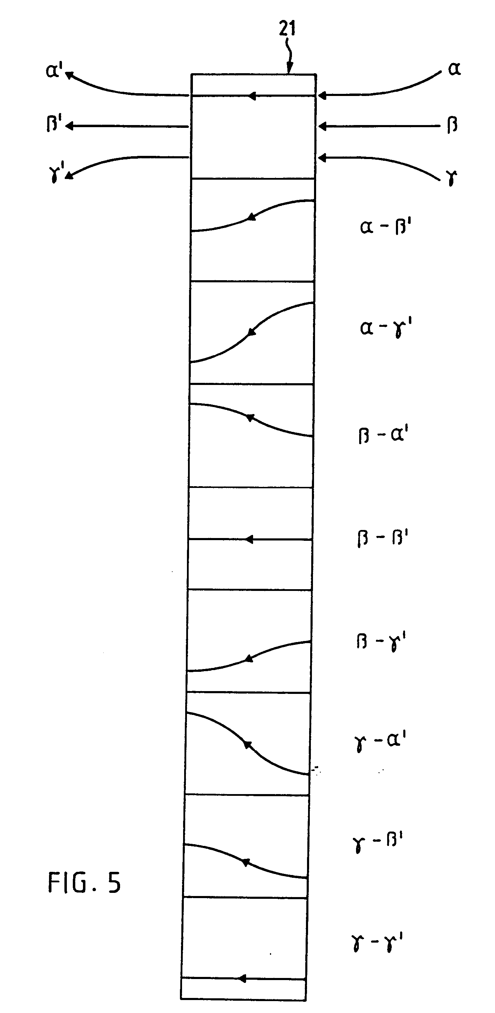

Figur 5 veranschaulicht beispielshalber einen Knotenpunkt neunten Grades mit drei Zuführungen α, β und γ sowie drei Wegführungen α', β' und γ', wobei auch hier wiederum die Begriffe Zu- und Wegführung willkürlich sind, da selbstverständlich auch Waren in umgekehrter Richtung gefördert werden können. Gezeigt wird eine erfindungsgemässe Prisma-Weiche, welche hier als gerades, regelmässiges, 9-flächiges Prisma ausgebildet ist und deren Mantelfläche in der Figur in der Abwicklung dargestellt ist. Jede der neun ebenen Seitenflächen enthält ein Teilstück eines Kettenkanals, entsprechend den neun möglichen Schaltvarianten, welche in der Zeichnung angegeben sind.

Grundsätzlich sind der Ausgestaltung der Prisma-Weiche keine Grenzen gesetzt: ein Knotenpunkt n-ten Grades wird durch ein gerades regelmässiges Prisma mit n Seitenflächen realisiert. Ein solches Prisma kann jedoch unter Umständen Dimensionen annehmen, welche eine praktische Realisierung nicht mehr zulassen oder zumindest erheblich erschweren. Gerade bei symmetrischen Knotenpunkten, wie z.B. in Figur 5, lassen sich verschiedene der auf dem Prisma angeordneten Kanal-Teilstücke theoretisch durch einfache geometrische Operationen (Spiegelung, Drehung) ineinander überführen.

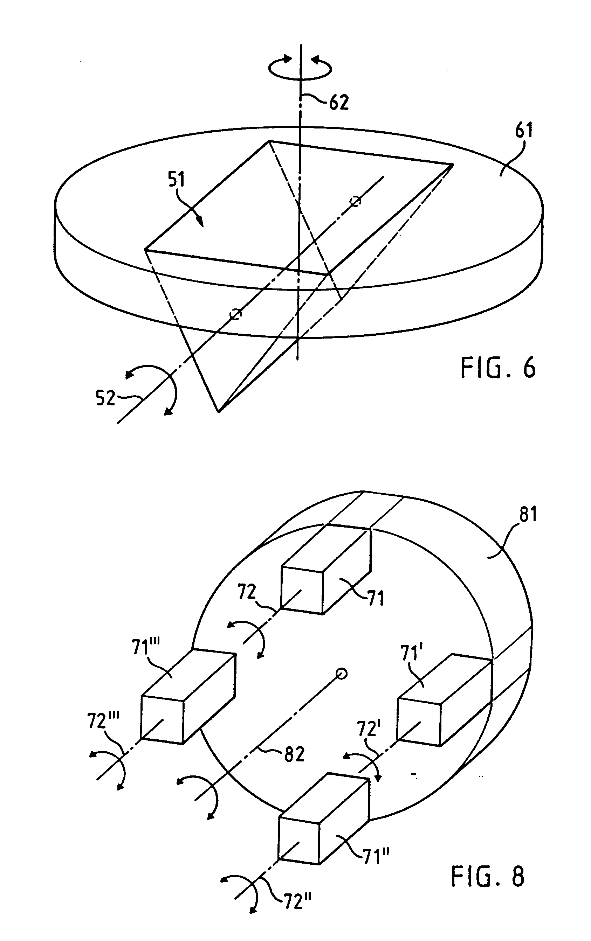

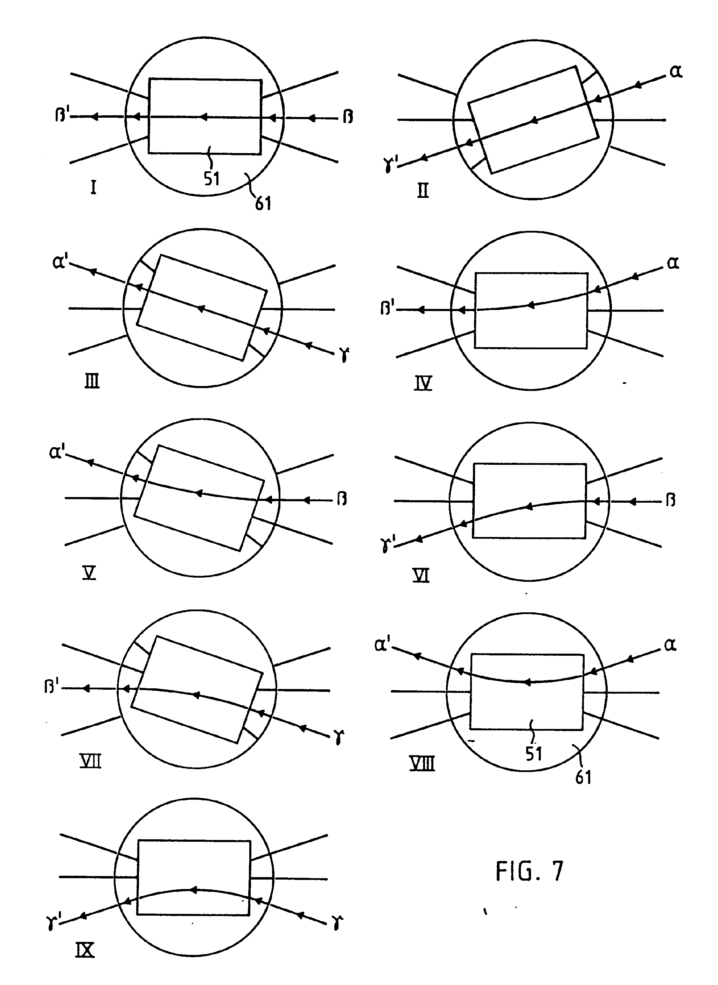

Dies kann in einer komplexeren Vorrichtung, wie sie in den Figuren 6 und 7 gezeigt wird, ausgenützt werden. Dabei wird das erfindungsgemässe Prisma 51, welches hier bloss drei Seitenflächen aufweist, zusätzlich in einer drehbaren Kreisplatte 61 gelagert. Dabei schneidet die Drehachse 62 der Kreisplatte 61 die Drehachse 52 des Prismas 51 vorzugsweise senkrecht. Figur 6 zeigt dies in einer Prinzipskizze, wobei auf die Einzeichnung der Kettenkanäle verzichtet wurde; Figur 7 zeigt dieselbe Vorrichtung in schematischer Darstellung und in der Umgebung eines Knotenpunktes neunten Grades, wie er bereits in Zusammenhang mit Figur 5 diskutiert worden ist.

Figur 7 zeigt die neun Schaltpositionen I bis IX, mittels welchen sämtliche der Verbindungen (α, β, γ) zu (α', β', γ') realisiert werden. Die Positionen I-III werden ohne Drehen des Prismas, sondern nur durch Drehung der Kreisplatte 61 ineinander übergeführt. Für Position IV wird das Prisma, ausgehend von Position I, um 120° gedreht. Die Positionen IV bis VII sind wiederum durch reine Drehung der Kreisplatte 61 ineinander überführbar. Zum Erreichen der Position VIII wird die dritte Seitenfläche des Prismas nach oben gedreht, durch Drehung der Kreisplatte 61 um 180° wird die Position IX realisiert.

Da bei der in den Figuren 6 und 7 gezeigten Vorrichtung Positionen vorkommen, bei denen nicht an der gewünschten Verbindung beteiligte Zuführungen mit einem Zwischenkanalstück der Scheibe 61 übereinstimmen, ist durch zusätzliche geeignete Massnahmen (z.B. im Zuführungskanal angeordnete, steuerbare Sperren) dafür zu sorgen, dass nicht durch eine sich im Zwischenteilstück der Scheibe befindliche Förderkette die Drehbewegung der Scheibe blockiert wird.

Als weitere Variante zur Erhöhung der Flexibilität des Knotenpunktes kann auch eine Vorrichtung vorgesehen werden, welche es erlaubt, aus mehreren mit unterschiedlichen Teilkanälen versehenen Prismen das jeweils geeignete in Einsatz zu bringen. Eine mögliche Ausführungsform besteht gemäss Figur 8 darin, die Drehachsen 72, 72', 72'', 72''' dieser Prismen 71, 71', 71'', 71'' auf einer Drehscheibe 81 zu lagern, welche ihrerseits um eine Drehachse 82 drehbar ist.

Selbstverständlich beschränkt sich die Erfindung nicht auf die vorangehend dargestellten Ausführungsformen. Insbesondere brauchen die Zu- und Wegführungen nicht notwendigerweise auf den Grundflächen des Prismas ein- bzw. auszutreten. Vielmehr können die Zu- und/oder Wegführungen auch im wesentlichen quer zur Längsmittelachse des Prismas verlaufen. Auf diese Weise können Knotenpunkte, realisiert werden, welche im Gegensatz zu den in den Figuren dargestellten Verzweigungen eher als Kreuzungen oder Abzweigungen zu bezeichnen sind. Dank der dazugewonnenen dritten Dimension ist es auch denkbar, schräg oder vertikal verlaufende Förderbahnen (vergleichbar einem Lift) vorzusehen, welche mit den horizontalen Bahnen beispielsweise so zusammenarbeiten, dass ein bestimmtes Fördergut von der einen Bahn angeliefert, im Bereich des Knotenpunktes deponiert und nach erfolgter Umschaltung der Prismenweiche durch die andere Bahn weiterbefördert wird.

## Patentansprüche

1. Vorrichtung zur wahlweisen Verbindung von einen Knotenpunkt eines Fördersystems bildenden Förderbahnen mit Kettenkanälen und in diesen verlaufenden stoss- und zugbetreibbaren Förderketten ohne Rücktrum, wobei diese Förderketten an ihrem einen Endbereich je mit einem zur Aufnahme einer Last bestimmten Fördermittel versehen sind und mit ihrem andern Endbereich je durch ein Antriebsorgan geführt und durch dieses hin- und herbewegbar sind, **dadurch gekennzeichnet**, dass zwischen den zum Knotenpunkt hinführenden (11', 11'') und den von diesem wegführenden Förderbahnen (11) ein gerades, um seine Längsmittelachse (22) drehbar gelagertes Prisma (21) angeordnet ist, wobei mindestens zwei Seitenflächen des Prismas (21) je mit einem durchgehenden, unterschiedlich angeordneten oder verlaufenden Kettenkanal-Teilstück (23', 23'') versehen sind, welche Kettenkanal-Teilstücke durch Drehung des Prismas (21) wahlweise zwischen den entsprechenden Kettenkanal (13' oder 13'') einer zuführenden Förderbahn (11' oder 11'') und den Kettenkanal (13) einer wegführenden Förderbahn (11) schaltbar und mit diesen in Übereinstimmung bringbar ist.

2. Vorrichtung nach Anspruch 2, **dadurch gekennzeichnet**, dass das Prisma (21) entlang seiner Längsmittelachse (22) auf einer motorisch oder manuell antreibbaren Welle (32) gelagert ist.

3. Vorrichtung nach einem der vorangehenden Ansprüche, **dadurch gekennzeichnet**, dass eine Einrichtung (36, 37, 38) zur genauen Positionierung und Arretierung des Prismas (21) vorgesehen ist.

4. Vorrichtung nach Anspruch 3, **dadurch gekennzeichnet**, dass das Prisma (21) zumindest auf einer seiner Grundflächen Bohrungen (38) aufweist, welche mit einem ortsfest angeordneten, gesteuert hin- und herbewegbaren Bolzen (36) so zusammenwirken, dass das Prisma bei Erreichen einer vorgehenenen Schaltposition durch den in die Bohrung (38) eingreifenden Bolzen (36) justiert und arretiert wird.

5. Vorrichtung nach einem der vorangehenden Ansprüche, **gekennzeichnet durch** eine Hubvorrichtung, um das Prisma vor der Drehung abzusenken und nach der Drehung wieder in die ursprüngliche Lage zu bringen.

6. Vorrichtung nach einem der vorangehenden Ansprüche, **dadurch gekennzeichnet**, dass das um eine erste Raumachse (52) drehbare Prisma (51) so gelagert ist, dass es zudem um eine zweite, im wesentlichen senkrecht zur ersten verlaufende Raumachse (62) drehbar ist.

7. Vorrichtung nach Anspruch 6, **dadurch gekennzeichnet**, dass zwischen dem Prisma (51) und den zu- bzw. wegführenden Förderbahnen (α, β, γ bzw. α', β', γ') eine um die zweite Raumachse (62) drehbare Kreisscheibe (61) angeordnet ist, welche ihrerseits als Lager für die Drehachse (52) des Prismas (51) dient.

8. Vorrichtung nach einem der vorangehenden Ansprüche, **dadurch gekennzeichnet**, dass mehrere Prismen (71, 71', 71'', 71''') so auf einer gemeinsamen drehbaren Einrichtung (81) gelagert sind, dass durch Drehung dieser Einrichtung wahlweise eines der Prismen zwischen den zu- und wegführenden Förderbahnen des Knotenpunktes positionierbar ist.

9. Vorrichtung nach Anspruch 8, **dadurch gekennzeichnet**, dass die Drehachsen (72, 72', 72'', 72''') der Prismen (71, 71', 71'', 71''') im wesentlichen parallel zur Drehachse (82) der gemeinsamen drehbaren Einrichtung (81) verlaufen.

## Claims

1. Apparatus for the random connection of conveying paths forming a junction of a conveying system with chain channels and push/pull-operable conveying chains without a return strand running therein, said conveying chain being provided on one end region thereof with in each case a conveying means for receiving a load and with the other end region thereof are guided by in each case one drive element and are reciprocatable by the latter, characterized in that between the conveying paths (11', 11'') leading to the junction and the conveying path (11) leading away from the same, there is a straight prism (21) mounted in rotary manner about its median longitudinal axis (22), in which at least two lateral faces of the prism (21) are in each case provided with a continuous, differently arranged or directed chain channel portion (23', 23''), said chain channel portions being switchable by the rotation of the prism (21) randomly between the corresponding chain channel (13' or 13'') of an inward conveying path (11' or 11'') and the chain channel (13) of an outward conveying path (11) and can be made to coincide therewith.

2. Apparatus according to claim 1, characterized in that along its median longitudinal axis (22) the prism (21) is mounted on a motor or manually drivable shaft (32).

3. Apparatus according to one of the preceding claims, characterized in that there is a device (36, 37, 38) for the precise positioning and locking of the prism (21).

4. Apparatus according to claim 3, characterized in that, at least on its base areas, the prism (21) has holes (38), which so cooperate with a fixed, controlled reciprocatable bolt (36) that on reaching a given switching position, the prism is adjusted and locked by the bolt (36) engaging in the hole (38).

5. Apparatus according to one of the preceding claims, characterized by a lifting device in order to lower the prism prior to rotation and return it to its original position after rotation.

6. Apparatus according to one of the preceding claims, characterized in that the prism (51) rotatable about a first space axis (52) is mounted in such a way that it is also rotatable about a second space axis (62) substantially perpendicular to the first space axis.

7. Apparatus according to claim 6, characterized in that between the prism (51) and the inward, respectively outward conveying paths (α, β, γ respectively α', β', γ') is provided a circular plate (61) rotatable about the second space axis (62) and which in turn serves as a bearing for the rotation axis (52) of the prism (51).

8. Apparatus according to one of the preceding claims, characterized in that several prisms (71, 71', 71'', 71''') are so mounted on a common, rotary device (81), that by rotating said device randomly one of the prisms can be positioned between the inward and outward conveying paths of the junction.

9. Apparatus according to claim 8, characterized in that the rotation axes (72, 72', 72'', 72''') of the prisms (71, 71', 71'', 71''') run substantially parallel to the rotation axis (82) of the common, rotary device (81).

## Revendications

1. Dispositif permettant de relier au choix des voies de convoyage qui forment un noeud de communication dans un système de convoyage, comprenant des canaux à chaînes et des chaînes transporteuses sans brins de retour passant dans ces canaux et entrainées par poussée ou par traction, lesdites chaînes transporteuses étant munies, à l'une de leurs extrémités, d'un moyen de transport destiné à porter une charge et étant entraînées, par l'autre extrémité, par un organe d'entraînement permettant d'avancer et de reculer la chaîne, caractérisé en ce qu'un prisme rectiligne (21) pouvant tourner autour de son axe longitudinal (22) est disposé entre la voie de convoyage (11', 11'') s'approchant du noeud et la voie (11) s'éloignant de ce noeud, au moins deux faces latérales du prisme (21) étant munies chacune d'un élément de canal à chaîne continu (23', 23''), de disposition ou d'orientation différente, ledit élément de canal à chaîne pouvant être commuté, par rotation du prisme (21) entre le canal à chaîne correspondant (13' ou 13'') à une voie de convoyage (11' ou 11'') s'approchant du noeud et le canal à chaîne (13) d'une voie de convoyage (11) s'éloignant du noeud et pouvant être aligné avec ces voies.

2. Dispositif selon la revendication 2, caractérisé en ce que le prisme (21) est monté le long de son axe longitudinal (22) sur un arbre (32) entraîné par un moteur ou par un entrainement manuel.

3. Dispositif selon l'une quelconque des revendications précédentes, caractérisé en ce qu'il comprend un système (36, 37, 38) assurant le positionnement précis et le blocage du prisme (21).

4. Dispositif selon la revendication 3, caractérisé en ce que le prisme (21) présente, au moins sur l'une de ses faces de base, des alésages (38) adaptés à une goupille fixe (36) pouvant être déplacée par un système de commande de manière à ajuster le prisme et à le bloquer, lorsqu'il a atteint une position de communication préalablement définie, à l'aide de la goupille (36) introduite dans l'alésage (38).

5. Dispositif selon l'une quelconque des revendications précédentes, caractérisé par un dispositif de levage permettant d'abaisser le prisme avant la rotation de ce dernier et de le remonter dans sa position d'origine après la rotation.

6. Dispositif selon l'une quelconque des revendications précédentes, caractérisé en ce que le prisme (51) monté de manière rotative autour d'un premier axe spatial (52) est disposé de manière à pouvoir tourner, en outre, autour d'un deuxième axe spatial (62) sensiblement perpendiculaire par rapport au premier.

7. Dispositif selon la revendication 6, caractérisé en ce qu'un disque circulaire (61) monté de manière rotative autour du deuxième axe spatial (62) est disposé entre le prisme (51) et les voies de convoyage s'approchant du noeud ou s'éloignant de ce dernier ( α , β, γ , α' , β' , γ'), ce disque circulaire servant de palier pour l'axe de rotation (52) du prisme (51).

8. Dispositif selon l'une quelconque des revendications précédentes, caractérisé en ce que plusieurs prismes (71, 71', 71'', 71''') sont montés sur un système rotatif commun (81) de manière à pouvoir positionner, au choix, l'un des prismes entre les voies de convoyage s'approchant du noeud ou s'éloignant de ce dernier par rotation de ce système.

9. Dispositif selon la revendication 8, caractérisé en ce que les axes de rotation (72, 72', 72'', 72''') des primes (71, 71', 71'', 71''') sont sensiblement parallèles par rapport à l'axe de rotation du système rotatif commun (81).
